# EUROPEAN PATENT APPLICATION

(11) **EP 4 806 689 A1**
(43) Date of publication of application: **16.09.2026**
(21) Application number: 26156418.1
(22) Date of filing: 04.02.2026
(51) Int. Cl.: B60K 7/00, B60K 17/02, B60K 17/04

(54) **COAXIAL DRIVE SYSTEM WITH DUAL WHEEL-SIDE MOTORS FOR LEFT AND RIGHT WHEELS OF BATTERY ELECTRIC VEHICLE**

(30) Priority: 14.03.2025 CN 202510304413
(71) Applicant: Zhejiang Xin Precision Machinery Co., Ltd., Taizhou, Zhejiang 318000 (CN)
(72) Inventor: YU, Wenyong, Taizhou, 318000 (CN); JIN, Jianhua, Taizhou, 318000 (CN); MA, Qiang, Taizhou, 318000 (CN)
(74) Representative: Metida

(57) **Abstract**

Disclosed is a coaxial drive system with dual wheel-side motors for left and right wheels of a battery electric vehicle, including a first motor and a second motor located on two sides of a wheel hub. The first motor includes a motor housing and a reducer housing. A motor rotating shaft is arranged in the motor housing. A reduction mechanism is arranged in the reducer housing. The motor rotating shaft is connected to the reduction mechanism. The reduction mechanism is connected to a wheel hub rotating shaft. The second motor has the same structure as the first motor, and a clutch mechanism is arranged between a reduction mechanism and a wheel hub rotating shaft in the second motor.

## Description

### Technical Field

The present disclosure belongs to the field of electric drive technologies, and more particularly relates to a coaxial drive system with dual wheel-side motors for left and right wheels of a battery electric vehicle.

### Background

With the development and popularization of an automobile electrification technology, the electrification technology has gradually expanded to other fields, such as ship electrification, engineering machinery electrification, and the industries of battery electric two-wheeled and three-wheeled motorcycles. Previously, an electric drive technology was mostly applied to small-displacement models in the motorcycle industry, such as electric bicycles and mopeds. In recent years, the electric drive technology has also been gradually applied to large-sized motorcycles.

**In** the field of electric drive, the current commonly-used structural forms are realized by an in-wheel motor and a mid-mounted motor. Although the in-wheel motor has a simple structure, the in-wheel motor is large in weight and low in efficiency, which not only affects the handling performance of the whole vehicle but also increases material costs. In addition, the in-wheel motor has poor waterproof and sealing performances. In contrast, the mid-mounted motor has a long transmission path, and occupies a limited battery space, thus reducing the driving range of the whole vehicle.

### Summary

Aiming at the deficiencies of the related art, the present disclosure provides a coaxial drive system with dual wheel-side motors for left and right wheels of a battery electric vehicle. The system occupies less space and allows a larger battery to be accommodated to increase a driving range. The integrated and coaxial structural design makes the appearance more coordinated and attractive, with a light weight, a compact shape, and high efficiency.

To achieve the foregoing objective, the present disclosure provides the following technical solutions: A coaxial drive system with dual wheel-side motors for left and right wheels of a battery electric vehicle includes a first motor and a second motor located on two sides of a wheel hub. The first motor includes a motor housing and a reducer housing. A motor rotating shaft is arranged in the motor housing. A reduction mechanism is arranged in the reducer housing. The motor rotating shaft is connected to the reduction mechanism. The reduction mechanism is connected to a wheel hub rotating shaft. The second motor has the same structure as the first motor, and a clutch mechanism is arranged between a reduction mechanism and a wheel hub rotating shaft in the second motor.

Further, the reduction mechanism includes a sun gear arranged on the motor rotating shaft, a plurality of planetary gears, and a fixed gear ring arranged on an inner wall of the reducer housing. A carrier is arranged between the plurality of planetary gears, and the planetary gears are rotatably connected to the carrier. The carrier on the first motor is connected to the wheel hub rotating shaft, and an output shaft is arranged on the carrier of the second motor. The output shaft is connected to the wheel hub rotating shaft through the clutch mechanism.

Further, the clutch mechanism includes a clutch fixing sleeve and a one-way bearing. An inner ring of the one-way bearing is connected to the wheel hub rotating shaft, and an outer ring of the one-way bearing is connected to the clutch fixing sleeve. The clutch fixing sleeve is connected to the output shaft on the second motor.

Further, the clutch fixing sleeve is connected to the one-way bearing and the output shaft through flat keys respectively. A set screw is arranged on a spline sleeve.

Further, the clutch mechanism includes a one-way bearing and a clutch drive rod. A clutch drive sleeve is rotatably connected to the clutch drive rod. An inner ring of the one-way bearing is connected to the wheel hub rotating shaft, and an outer ring of the one-way bearing is connected to the clutch drive sleeve through a spline. The clutch drive sleeve is slidably connected to the output shaft on the second motor. A drive mechanism is connected to the clutch drive rod.

Further, a spline sleeve is arranged on the output shaft, and the spline sleeve is connected to the output shaft through a flat key. The clutch drive sleeve is slidably connected to the spline sleeve through a spline. A set screw is arranged on the spline sleeve.

Further, the clutch mechanism includes a clutch drive rod. A clutch drive sleeve is rotatably connected to the clutch drive rod. The clutch drive sleeve is slidably connected to the wheel hub rotating shaft and the output shaft on the second motor respectively. A drive mechanism is connected to the clutch drive rod.

Compared with the related art, the beneficial effects of the present disclosure are as follows: In the present disclosure, a conventionally designed mid-mounted motor or in-wheel motor is divided into two smaller wheel-side motors. The left and right dual-motor arrangement optimizes the weight distribution of the whole vehicle, improves the handling performance, saves the vehicle space occupied by the mid-mounted motor for accommodating a larger battery to increase a driving range, and mitigates the performance degradation caused by the increased rotational inertia of the in-wheel motor. The independent drive and control of the left and right motors enable the whole vehicle to operate in an energy-saving state more effectively. The integrated and coaxial structural design makes the appearance of the whole vehicle more coordinated and attractive, with a light weight and a compact shape. The adoption of a coaxial drive mode with a planetary reducer achieves higher efficiency.

### Brief Description of Figures

FIG. 1 is a structural schematic diagram of a coaxial drive system with dual wheel-side motors for left and right wheels of a battery electric vehicle according to Embodiment 1 of the present disclosure;
FIG. 2 is a structural schematic diagram of a coaxial drive system with dual wheel-side motors for left and right wheels of a battery electric vehicle according to Embodiment 2 of the present disclosure; and
FIG. 3 is a structural schematic diagram of a first motor in a coaxial drive system with dual wheel-side motors for left and right wheels of a battery electric vehicle according to the present disclosure.

Reference numerals: 1: first motor; 2: second motor; 3: motor housing; 4: reducer housing; 5: motor rotating shaft; 6: reduction mechanism; 7: wheel hub rotating shaft; 8: wheel hub; 9: clutch mechanism; 10: sun gear; 11: planetary gear; 12: fixed gear ring; 13: output shaft; 14: clutch fixing sleeve; 15: one-way bearing; 16: clutch drive rod; 17: clutch drive sleeve; 18: spline sleeve; and 19: carrier.

### Detailed Description

In the descriptions of the present disclosure, it should be noted that orientation-related terms such as "center", "transverse (X)", "longitudinal (Y)", "vertical (Z)", "length", "width", "thickness", "upper", "lower", "front", "rear", "left", "right", "upright", "horizontal", "top", "bottom", "inner", "outer", "clockwise", and "counterclockwise" are used to indicate orientations and positional relationships based on the orientations and positional relationships shown in the accompanying drawings. These terms are used solely to facilitate the description of the present disclosure and simplify the description, and are not intended to indicate or imply that the referred apparatus or elements must have a particular orientation or be constructed and operated in a particular orientation. These terms should not be construed as limiting a specific scope of protection of the present disclosure.

Furthermore, terms such as "first" and "second" are used for descriptive purposes only and should not be interpreted as indicating or implying relative importance or implicitly specifying the quantity of technical features. Thus, features defined by "first" or "second" may explicitly or implicitly include one or more of such features. In the description of the present disclosure, the term "a number of" or "a plurality of" means two or more, unless explicitly defined otherwise.

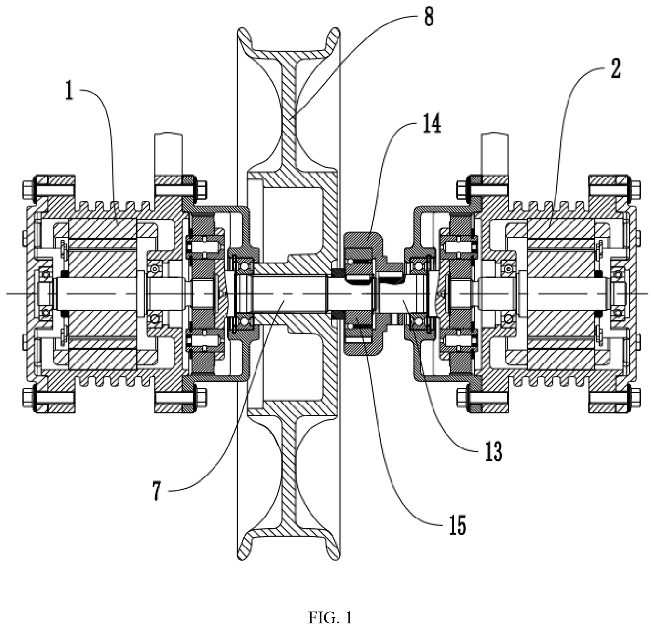

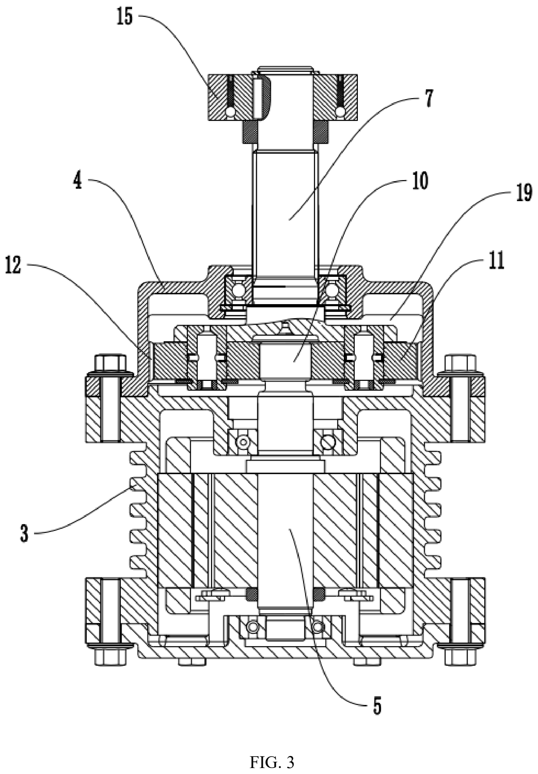

The present disclosure will be further described with reference to FIG. 1 to FIG. 3.

### Embodiment 1:

A coaxial drive system with dual wheel-side motors for left and right wheels of a battery electric vehicle includes a first motor 1 and a second motor 2 located on two sides of a wheel hub 8. The first motor 1 includes a motor housing 3 and a reducer housing 4. A motor rotating shaft 5 is arranged in the motor housing 3. A reduction mechanism 6 is arranged in the reducer housing 4. The motor rotating shaft 5 is connected to the reduction mechanism 6. The reduction mechanism 6 is connected to a wheel hub rotating shaft 7. The second motor 2 has the same structure as the first motor 1, and a clutch mechanism 9 is arranged between a reduction mechanism 6 and a wheel hub rotating shaft 7 in the second motor 2.

As shown in FIG. 1, in a preferred embodiment, the reduction mechanism 6 includes a sun gear 10 arranged on the motor rotating shaft 5, a plurality of planetary gears 11, and a fixed gear ring 12 arranged on an inner wall of the reducer housing 4. A carrier 19 is arranged between the plurality of planetary gears 11, and the planetary gears 11 are rotatably connected to the carrier 19. The carrier 19 on the first motor 1 is connected to the wheel hub rotating shaft 7, and an output shaft 13 is arranged on the carrier 19 of the second motor 2. The output shaft 13 is connected to the wheel hub rotating shaft 7 through the clutch mechanism 9.

Specifically, the motor rotating shaft 5 rotates to drive the planetary gears 11 to rotate around the axis of the motor rotating shaft 5, and transmits power through the connected carrier 19. To be specific, the carrier 19 of the first motor 1 is directly connected to the wheel hub rotating shaft 7 and directly drives the wheel hub 8 to rotate.

Specifically, both the first motor 1 and the second motor 2 are connected to a vehicle frame.

As shown in FIG. 1, in a preferred embodiment, the clutch mechanism 9 includes a clutch fixing sleeve 14 and a one-way bearing 15. An inner ring of the one-way bearing 15 is connected to the wheel hub rotating shaft 7, and an outer ring of the one-way bearing 15 is connected to the clutch fixing sleeve 14. The clutch fixing sleeve 14 is connected to the output shaft 13 on the second motor 2.

As shown in FIG. 1, in a preferred embodiment, the clutch fixing sleeve 14 is connected to the one-way bearing 15 and the output shaft 13 through flat keys respectively. A set screw is arranged on a spline sleeve 18.

As shown in FIG. 1, the first motor 1 directly drives the wheel hub 8 to rotate. Owing to the arrangement of the one-way bearing 15, the first motor 1 does not transmit power to the output shaft 13 of the reduction mechanism 6 of the second motor 2 during operation, thereby preventing power loss and damage to the two motors. When the second motor 2 is required to participate in power output, the second motor 2 can transmit power to the wheel hub rotating shaft 7 through the one-way bearing 15, to realize the power output of the two motors.

In the present disclosure, a conventionally designed mid-mounted motor or in-wheel motor is divided into two smaller wheel-side motors. The left and right dual-motor arrangement optimizes the weight distribution of the whole vehicle, improves the handling performance, saves the vehicle space occupied by the mid-mounted motor for accommodating a larger battery to increase a driving range, and mitigates the performance degradation caused by the increased rotational inertia of the in-wheel motor. The independent drive and control of the left and right motors enable the whole vehicle to operate in an energy-saving state more effectively. The integrated and coaxial structural design makes the appearance of the whole vehicle more coordinated and attractive, with a light weight and a compact shape. The adoption of a coaxial drive mode with a planetary reducer achieves higher efficiency.

Specifically, the arrangement positions of the first motor 1 and the second motor 2 may be interchanged left and right.

Specifically, the one-way bearing 15 may be removed according to specific requirements, so that outputs of the first motor 1 and the second motor 2 are directly connected to the wheel hub rotating shaft 7. To be specific, the two motors realize simultaneous drive.

### Embodiment 2

A coaxial drive system with dual wheel-side motors for left and right wheels of a battery electric vehicle includes a first motor 1 and a second motor 2 located on two sides of a wheel hub 8. The first motor 1 includes a motor housing 3 and a reducer housing 4. A motor rotating shaft 5 is arranged in the motor housing 3. A reduction mechanism 6 is arranged in the reducer housing 4. The motor rotating shaft 5 is connected to the reduction mechanism 6. The reduction mechanism 6 is connected to a wheel hub rotating shaft 7. The second motor 2 has the same structure as the first motor 1, and a clutch mechanism 9 is arranged between a reduction mechanism 6 and a wheel hub rotating shaft 7 in the second motor 2.

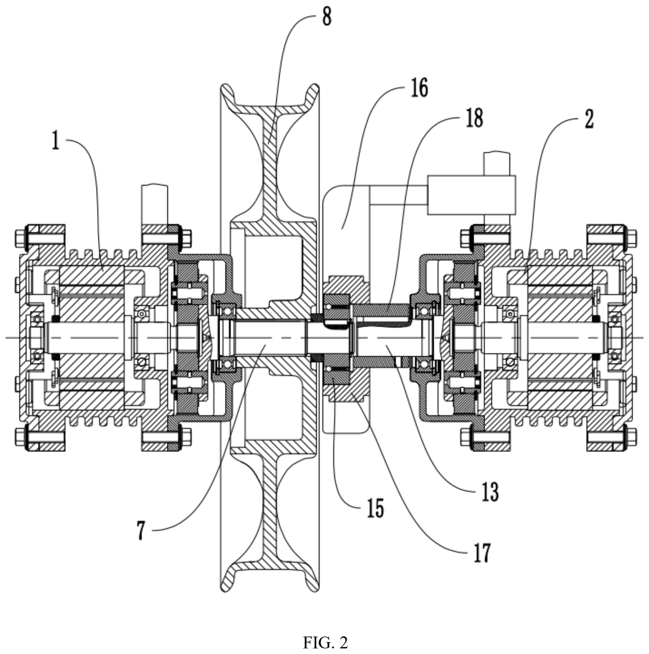

As shown in FIG. 2, in a preferred embodiment, the clutch mechanism 9 includes a one-way bearing 15 and a clutch drive rod 16. A clutch drive sleeve 17 is rotatably connected to the clutch drive rod 16. An inner ring of the one-way bearing 15 is connected to the wheel hub rotating shaft 7, and an outer ring of the one-way bearing 15 is connected to the clutch drive sleeve 17 through a spline. The clutch drive sleeve 17 is slidably connected to the output shaft 13 on the second motor 2. A drive mechanism is connected to the clutch drive rod 16.

Specifically, the drive mechanism may be an electric telescopic rod, a hydraulic telescopic oil cylinder, or the like.

As shown in FIG. 2, in a preferred embodiment, a spline sleeve 18 is arranged on the output shaft 13, and the spline sleeve 18 is connected to the output shaft 13 through a flat key. The clutch drive sleeve 17 is slidably connected to the spline sleeve 18 through a spline. A set screw is arranged on the spline sleeve 18.

As shown in FIG. 2, the first motor 1 directly drives the wheel hub 8 to rotate. When the second motor 2 is not required to participate in driving, the clutch drive rod 16 drives the clutch drive sleeve 17 to the right to disconnect the one-way bearing 15 from the output shaft 13 of the second motor 2. At this moment, the wheel hub rotating shaft 7 is driven solely by the first motor 1, and the one-way bearing 15 idles on the wheel hub rotating shaft 7. When the second motor 2 is required to participate in driving, the clutch drive rod 16 then drives the clutch drive sleeve 17 to the left to connect the one-way bearing 15 to the output shaft 13 of the second motor 2. The second motor 2 is then started, enabling power to be transmitted to the wheel hub rotating shaft 7 via the one-way bearing 15. In addition, when the second motor 2 shuts down temporarily, the one-way bearing 15 can prevent the power of the first motor 1 from being transmitted to the second motor 2.

The arrangement of the clutch drive rod 16 and the clutch drive sleeve 17 allows the second motor 2 to be completely disconnected from the wheel hub rotating shaft 7 when not participating in driving for a long time, which reduces wear of the one-way bearing 15 caused by long-term no-power output of the second motor 2. Meanwhile, the slight rotation of the output shaft 13 of the second motor 2 induced by frictional inertia between the inner and outer rings of the one-way bearing 15 or bearing friction is completely eliminated, thus avoiding any energy loss and improving the efficiency of the first motor 1. In addition, when a fault occurs in an auxiliary motor, the auxiliary motor can be directly disconnected to prevent any impact on the operation of the first motor 1, enhancing the reliability of the system. The combination of the two motors not only retains the one-way isolation advantage of the one-way bearing 15 but also achieves complete separation or participation of the auxiliary motor through the on-off of a clutch, providing a more comprehensive power management capability, thereby optimizing efficiency, flexibility, and safety.

Specifically, the system can also be applied to a reversible first motor 1, enabling reverse driving when the clutch drive sleeve 17 disconnects the one-way bearing 15 from the output shaft 13 of the second motor 2.

The other technical features are the same as those of Embodiment 1.

### Embodiment 3

A coaxial drive system with dual wheel-side motors for left and right wheels of a battery electric vehicle includes a first motor 1 and a second motor 2 located on two sides of a wheel hub 8. The first motor 1 includes a motor housing 3 and a reducer housing 4. A motor rotating shaft 5 is arranged in the motor housing 3. A reduction mechanism 6 is arranged in the reducer housing 4. The motor rotating shaft 5 is connected to the reduction mechanism 6. The reduction mechanism 6 is connected to a wheel hub rotating shaft 7. The second motor 2 has the same structure as the first motor 1, and a clutch mechanism 9 is arranged between a reduction mechanism 6 and a wheel hub rotating shaft 7 in the second motor 2.

In a preferred embodiment, the clutch mechanism 9 includes a clutch drive rod 16. A clutch drive sleeve 17 is rotatably connected to the clutch drive rod 16. The clutch drive sleeve 17 is slidably connected to the wheel hub rotating shaft 7 and the output shaft 13 on the second motor 2 respectively. A drive mechanism is connected to the clutch drive rod 16.

The other technical features are the same as those of Embodiment 2.

The foregoing description presents only preferred implementations of the present disclosure, and the scope of protection of the present disclosure is not limited to the foregoing embodiments. All technical solutions falling within the idea of the present disclosure shall be considered within the scope of protection of the present disclosure. It should be noted that those of ordinary skill in the art may make various modifications and refinements without departing from the principles of the present disclosure. Such modifications and refinements should also be regarded as falling within the scope of protection of the present disclosure.

## Claims

1. A coaxial drive system with dual wheel-side motors for left and right wheels of a battery electric vehicle, comprising: a first motor and a second motor located on two sides of a wheel hub, wherein the first motor comprises a motor housing and a reducer housing; a motor rotating shaft is arranged in the motor housing, and a reduction mechanism is arranged in the reducer housing; the motor rotating shaft is connected to the reduction mechanism, and the reduction mechanism is connected to a wheel hub rotating shaft; and the second motor has the same structure as the first motor, and a clutch mechanism is arranged between a reduction mechanism and a wheel hub rotating shaft in the second motor.

2. The coaxial drive system with dual wheel-side motors for left and right wheels of a battery electric vehicle according to claim 1, wherein the reduction mechanism comprises a sun gear arranged on the motor rotating shaft, a plurality of planetary gears, and a fixed gear ring arranged on an inner wall of the reducer housing; a carrier is arranged between the plurality of planetary gears, and the planetary gears are rotatably connected to the carrier; the carrier on the first motor is connected to the wheel hub rotating shaft, and an output shaft is arranged on the carrier of the second motor; and the output shaft is connected to the wheel hub rotating shaft through the clutch mechanism.

3. The coaxial drive system with dual wheel-side motors for left and right wheels of a battery electric vehicle according to claim 2, wherein the clutch mechanism comprises a clutch fixing sleeve and a one-way bearing; an inner ring of the one-way bearing is connected to the wheel hub rotating shaft, and an outer ring of the one-way bearing is connected to the clutch fixing sleeve; and the clutch fixing sleeve is connected to the output shaft on the second motor.

4. The coaxial drive system with dual wheel-side motors for left and right wheels of a battery electric vehicle according to claim 3, wherein the clutch fixing sleeve is connected to the one-way bearing and the output shaft through flat keys respectively, and a set screw is arranged on a spline sleeve.

5. The coaxial drive system with dual wheel-side motors for left and right wheels of a battery electric vehicle according to claim 2, wherein the clutch mechanism comprises a one-way bearing and a clutch drive rod; a clutch drive sleeve is rotatably connected to the clutch drive rod; an inner ring of the one-way bearing is connected to the wheel hub rotating shaft, and an outer ring of the one-way bearing is connected to the clutch drive sleeve through a spline; the clutch drive sleeve is slidably connected to the output shaft on the second motor; and a drive mechanism is connected to the clutch drive rod.

6. The coaxial drive system with dual wheel-side motors for left and right wheels of a battery electric vehicle according to claim 5, wherein a spline sleeve is arranged on the output shaft, and the spline sleeve is connected to the output shaft through a flat key; the clutch drive sleeve is slidably connected to the spline sleeve through a spline; and a set screw is arranged on the spline sleeve.

7. The coaxial drive system with dual wheel-side motors for left and right wheels of a battery electric vehicle according to claim 2, wherein the clutch mechanism comprises a clutch drive rod; a clutch drive sleeve is rotatably connected to the clutch drive rod; the clutch drive sleeve is slidably connected to the wheel hub rotating shaft and the output shaft on the second motor respectively; and a drive mechanism is connected to the clutch drive rod.
